# EUROPÄISCHE PATENTSCHRIFT

(11) **EP 1 047 881 B1**
(45) Veröffentlichungstag und Bekanntmachung des Hinweises auf die Patenterteilung: **03.12.2003**
(21) Anmeldenummer: 99955893.5
(22) Anmeldetag: 28.10.1999
(51) Int. Cl.: F15B 15/14, H02K 5/04, H02K 41/03

(54) **LINEARANTRIEB**
LINEAR DRIVE
SYSTEME D'ENTRAINEMENT LINEAIRE

(30) Priorität: 24.11.1998 DE 19853942
(43) Veröffentlichungstag der Anmeldung: 02.11.2000
(73) Patentinhaber: FESTO AG & Co, 73734 Esslingen (DE)
(72) Erfinder: HARTRAMPH, Ralf, D-71332 Waiblingen (DE); VEIT, Eberhard, D-73035 Göppingen (DE); SCHEURENBRAND, Hans, D-71394 Kernen (DE)
(74) Vertreter: Abel, Martin, Dipl.-Ing.
(86) Internationale Anmeldenummer: EP9908166
(87) Internationale Veröffentlichungsnummer: WO00031421

(56) Entgegenhaltungen:
- EP-A- 0 656 242
- EP-A- 0 683 010
- WO-A-93/01577
- WO-A-96/41411
- WO-A-98/37615
- DE-A- 4 436 865
- DE-A- 19 512 080
- DE-U- 29 706 098
- DE-U- 29 719 212
- US-A- 5 440 183

## Beschreibung

Die Erfindung betrifft einen Linearantrieb, mit einem Gehäuse, das eine Aufnahme begrenzt, in der Antriebsmittel angeordnet sind und aus der an mindestens einem axialen Endbereich ein mit den Antriebsmitteln zusammenwirkendes Kraftübertragungsglied herausragt.

Linearantriebe dieser Art sind in Gestalt fluidischer, also durch Fluidkraft betätigter Bauformen weit verbreitet. Ein mögliches Ausführungsbeispiel geht aus dem deutschen Gebrauchsmuster 297 06 098.8 hervor, das einen als Schlitten-Antriebsvorrichtung ausgebildeten Linearantrieb zeigt, dessen Gehäuse-Hauptkörper eine zylindrische Aufnahme enthält, in der ein die Antriebsmittel bildender Kolben verschiebbar angeordnet ist. Ein mit dem Kolben verbundenes stangenartiges Kraftübertragungsglied ragt stirnseitig aus dem Gehäuse-Hauptkörper heraus und ist mit einem zu bewegenden Gegenstand koppelbar. Die Betätigung des Linearantriebes erfolgt durch Fluidbeaufschlagung des Kolbens, zur Positionierung sind externe Anschläge vorgesehen.

Bei Linearantrieben dieser Art tritt üblicherweise das Problem auf, daß speziell bei pneumatischer Betätigung die punktgenaue Positionierung des Kraftübertragungsgliedes schwierig ist und daß der Kolben bei langsamen Bewegungen zum Ruckeln neigt, was feinfühlige Bewegungen und Positionierungen erschwert.

Es ist die Aufgabe der vorliegenden Erfindung, einen Linearantrieb der eingangs genannten Art zu schaffen, der eventuell erforderliche Positionierungsmaßnahmen begünstigt und insbesondere auch bei geringen Hubgeschwindigkeiten ruckfreie Bewegungen gestattet. Dies soll verbunden sein mit einem einfachen und montagefreundlichen Aufbau der Anordnung.

Zur Lösung dieser Aufgabe ist gemäß dem kennzeichnenden Teil des Patentanspruches 1 vorgesehen, daß die Antriebsmittel Bestandteil eines elektrischen Linearmotors sind, der als patronenartige Einheit in die Aufnahme eingesetzt und gehäusefest fixiert ist.

Abweichend vom genannten Stand der Technik liegt somit ein elektrischer Linearantrieb vor, dessen Antriebsmittel zu einem sogenannten Linearmotor gehören, einer Sonderbauform eines Elektromotors, bei der der Läufer keine rotierende, sondern eine geradlinige Bewegung ausführt. Die Antriebskraft wird von einem wandernden Magnetfeld bewirkt, wobei auch bei langsamer Fahrt ruckfreie und äußert gleichförmige Bewegungen realisiert werden können. Auch durch geringen Verschleiß und Wartungsarmut zeichnet sich ein solcher Linearmotor aus. Dabei ist erfindungsgemäß von weiterem Vorteil, daß der Linearmotor nicht in seinen Einzelteilen am Gehäuse festgelegt wird, sondern als patronenartige Einheit ausgeführt ist, die als Gesamtheit in die Aufnahme eingesetzt ist, wobei das Gehäuse keine betriebsrelevante Funktion für das elektrische Antriebsprinzip des Linearmotors auszuführen hat. Somit kann das Gehäuse über eine dem gewünschten Einsatzzweck entsprechende Formgebung verfügen, wobei sich der äußere Aufbau nicht von demjenigen eines vergleichbaren fluidischen Linearantriebes unterscheiden muß und praktisch lediglich an Stelle der bei fluidischen Linearantrieben üblichen fluidisch betätigten Antriebsmitteln der elektrische Linearmotor eingesetzt werden kann. Dabei ist auch von Vorteil, daß man bei Bedarf auf Grundlage eines einheitlichen Gehäuses wahlweise einen fluidischen oder einen elektrischen Linearantrieb realisieren kann, und zwar unter Verwendung einer großen Anzahl von Gleichteilen. Schließlich ist noch als vorteilhaft zu erwähnen, daß die bei einem Defekt der Antriebsmittel auftretenden Stillstandszeiten des Linearantriebes stark reduziert werden können, weil sich die kartuschenartige Linearmotoreinheit einfach und schnell austauschen läßt.

Zwar ist aus der DE 195 12 080 A1 bereits ein elektrischer Linearantrieb bekannt, der über ein Gehäuse verfügt, in das ein elektrischer Antrieb eingesetzt ist. Dort wird allerdings auf einen üblichen Elektromotor mit rotierender Spindel zurückgegriffen und auch ein Aufbau als patronenartige Einheit liegt nicht vor.

Die US-A-5 440 183 und die DE-U-29 719 212 zeigen Linearantriebe mit einem elektrischen Linearmotor, wobei jedoch diese Antriebsmittel keine patronenartige Einheit bilden, die im Gehäuse des Linearantriebs aufgenommen wird.

Vorteilhafte Weiterbildungen der Erfindung gehen aus den Unteransprüchen hervor.

Der Linearmotor weist zweckmäßigerweise ein über zumindest einen Teil seiner Länge rohr- oder hülsenähnlich ausgebildetes Motorgehäuse auf, das in die Aufnahme des Gehäuses eintaucht, wobei ein optimaler Sitz dadurch gewährleistet ist, daß seine Außenkontur komplementär zur Innenkontur des Aufnahmeraumes ausgebildet ist. Dabei bietet sich eine kreisförmige Querschnittskontur aufgrund der besonders einfachen Herstellung an. Möglich wären aber auch von der Kreisform abweichende Querschnittskonturen, insbesondere, wenn mit einfachen Mitteln eine verdrehgesicherte Fixierung der Linearmotoreinheit mit Bezug zum Gehäuse gewünscht ist.

Das Einsetzen des Linearmotors in die Aufnahme kann im Rahmen eines reinen linearen Steckvorganges erfolgen, und/oder beispielsweise durch Einschrauben, so daß der axialen Montagebewegung eine rotative Bewegung überlagert ist. Hierbei kann am Außenumfang des Motorgehäuses ein geeignetes Gewinde vorgesehen sein, das mit einem gehäuseseitigen Gegengewinde zusammenwirkt.

Zweckmäßigerweise ist die den Linearmotor über vorzugsweise zumindest den größten Teil seiner Länge aufnehmende Aufnahme über ihre gesamte Länge hinweg umfangsseitig geschlossen. Es kann somit auf Sonderbauformen verzichtet werden und man hat die Möglichkeit, als Ausgangsbasis für das Gehäuse auf einen vergleichbaren Körper eines konventionellen fluidischen Linearantriebes zurückzugreifen.

Die Aufnahme ist vorzugsweise von einem sich in einem Gehäuse-Hauptkörper des Gehäuses erstreckenden länglichen Aufnahmeraum gebildet, in den die Linearmotoreinheit patronenartig koaxial von einer Stirnseite her eingesetzt ist. Bei dem Gehäuse-Hauptkörper handelt es sich zweckmäßigerweise um ein Strangpreßprofil, in das der Aufnahmeraum in axial durchgehender Form eingebracht ist.

Zweckmäßigerweise verfügt der Linearmotor über ein zumindest über einen Großteil seiner Länge im Innern des Aufnahmeraumes angeordnetes Motorgehäuse, aus dem einenends das Kraftübertragungsglied herausragt und das andernends über elektrische Anschlußmittel für die Zufuhr und/oder Abfuhr elektrischer Signale verfügt, wobei die elektrischen Anschlußmittel vorzugsweise Bestandteil einer kompakten Kupplungseinrichtung sind.

Ein Betrieb mit hoher Präzision ist möglich, wenn das Kraftübertragungsglied an einem Führungsschlitten angreift, der außen am Gehäuse linear verschiebbar geführt ist. Ein solcher Führungsschlitten kann auch Querkräfte aufnehmen, so daß die mit dem Kraftübertragungsglied zusammenwirkenden Antriebsmittel des Linearmotors weitestgehend frei von verschleißfördernden Querbelastungen gehalten werden können.

Häufig stehen elektrische Linearantriebe in Konkurrenz zu fluidischen Linearantrieben, wobei aber in vielen Fällen durch die Randbedingungen des jeweiligen Anwendungsfalles die jeweils zum Einsatz gelangende Bauart vorgegeben wird. Eine gravierende Unzulänglichkeit in diesem Zusammenhang besteht darin, daß sich die unterschiedlichen Bauarten, wie durch das deutsche Gebrauchsmuster 297 06 098.8 und die DE 195 12 080 A1 bestätigt, stark unterscheiden, so daß die Hersteller zumeist nicht von allen Baugrößen beide Bauarten zur Verfügung stellen und die Anwender bei einer Umrüstung auf eine andere Betriebsart umfangreiche mechanische Umbauten an den anzutreibenden Aggregaten vornehmen müssen. Der erfindungsgemäße elektrische Linearantrieb hat hier den Vorteil, daß bei seiner Herstellung auf einen Gehäuse-Hauptkörper zurückgegriffen werden kann, der sich ohne aufwendige Änderungen alternativ auch als Gehäuse-Hauptkörper eines fluidischen Linearantriebes einsetzen läßt. Hierzu wird vorgesehen, daß die Gehäuse-Hauptkörper der beiden Bauarten von Linearantrieben in ihrer äußeren Formgebung zumindest im wesentlichen übereinstimmen und die in den Gehäuse-Hauptkörpern der beiden Linearantriebe vorgesehenen Aufnahmeräume die gleiche Querschnittsform haben. Somit kann bei der Herstellung der Gehäuse-Hauptkörper auf größtenteils identische Verfahrensschritte und Werkzeuge zurückgegriffen werden, wobei gleichzeitig beim Anwender die Kompatibilität gewährleistet ist. Die identische Querschnittsform der Aufnahmeräume macht eine flexible Fertigung möglich, da je nach Bauart lediglich wahlweise fluidisch betätigte oder elektrisch betätigte Antriebsmittel eingesetzt werden müssen.

Nachfolgend wird die Erfindung anhand der beiliegenden Zeichnung näher erläutert. In dieser zeigen:
- Figur 1: eine bevorzugte Bauform eines elektrischen Linearantriebes in perspektivischer Schrägansicht auf die Rückseite, wobei der zum Antrieb verwendete elektrische Linearmotor in einer bei der Montage eingenommenen Zwischenstellung gezeigt ist,
- Figur 2: den Linearantrieb aus Figur 1 im Längsschnitt in einer Horizontalebene gemäß Schnittlinie II-II,
- Figur 3: den Linearantrieb aus Figuren 1 und 2 im Querschnitt gemäß Schnittlinie III-III aus Figur 2, und
- Figur 4: einen fluidischen Linearantrieb in einer Längsschnittdarstellung analog Figur 4, der sich von dem elektrischen Linearantrieb der Figuren 1 bis 3 nur in den Antriebsmitteln unterscheidet, im übrigen jedoch einen identischen Aufbau hat.

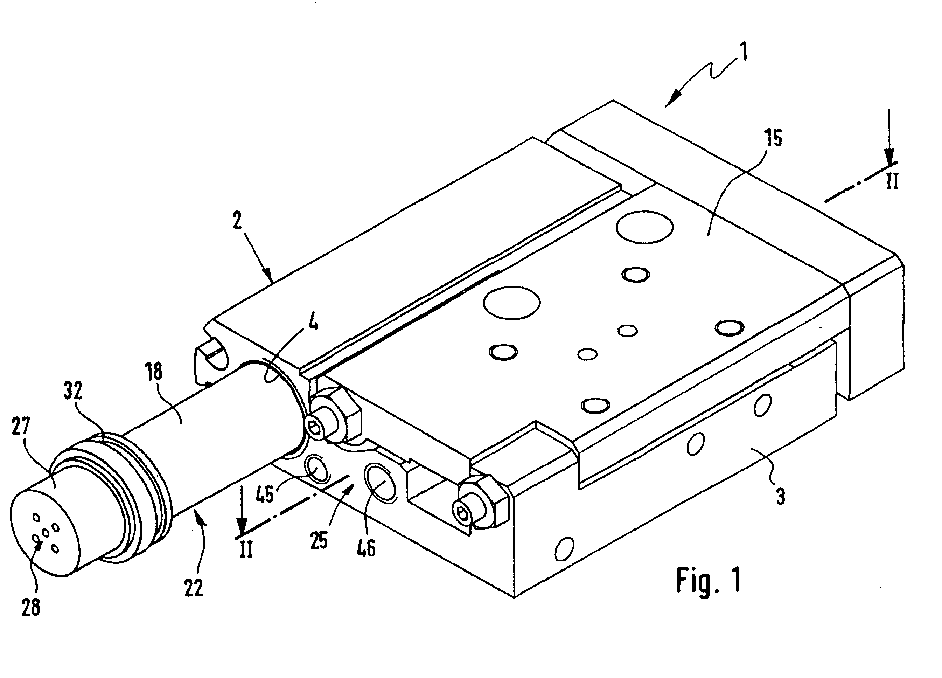

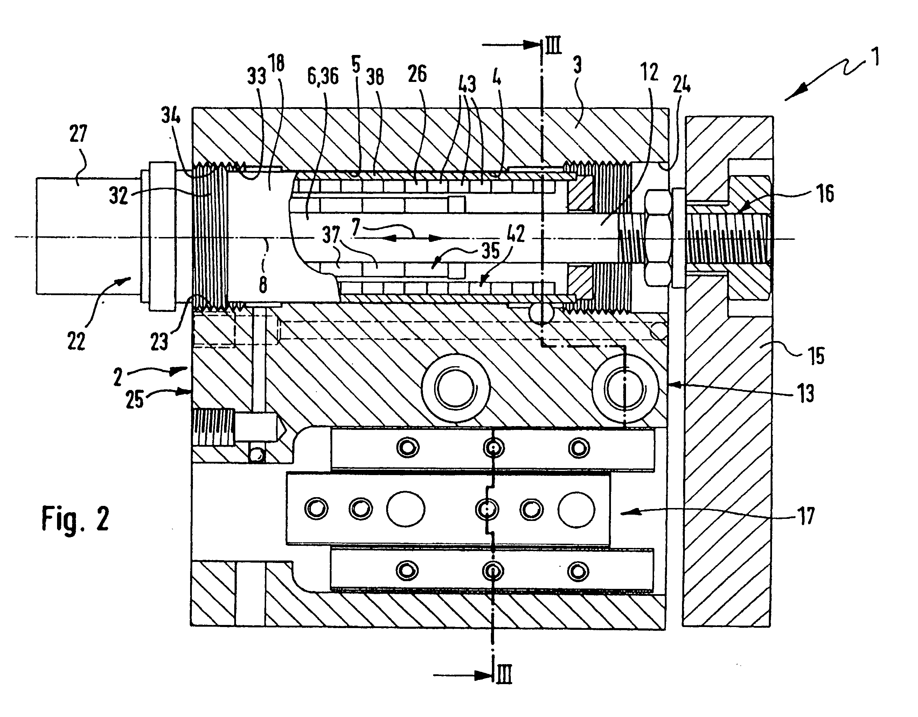

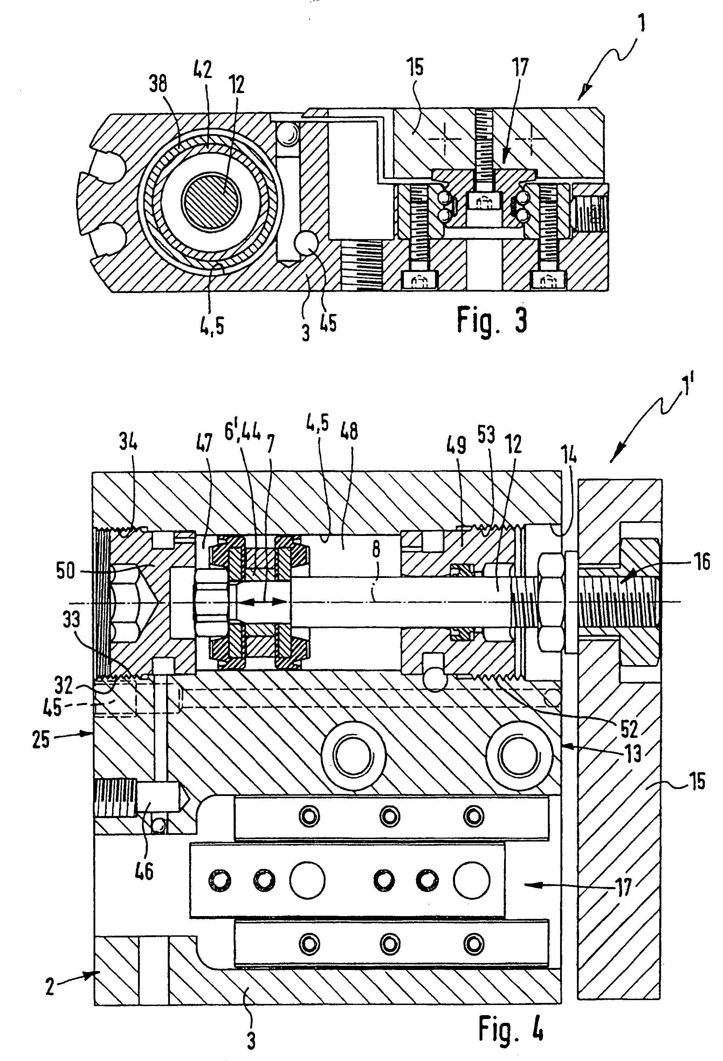

Der in Figuren 1 bis 3 gezeigte elektrische Linearantrieb 1 und der in Figur 4 gezeigte fluidische Linearantrieb 1' verfügen jeweils über ein allgemein mit Bezugsziffer 2 bezeichnetes Gehäuse, das einen vorzugsweise als Strangpreßteil ausgeführten Gehäuse-Hauptkörper 3 aufweist. Dieser besteht vorzugsweise aus einer Aluminiumlegierung.

Das Gehäuse 2 begrenzt eine längliche Aufnahme 4, die zweckmäßigerweise von einem den Gehäuse-Hauptkörper 3 axial durchsetzenden länglichen Aufnahmeraum 5 gebildet ist, der bei der Extrusionsherstellung des Gehäuse-Hauptkörpers 3 eingeformt werden kann. Der Aufnahmeraum 5 ist vorzugsweise über seine gesamte Länge hinweg umfangsseitig geschlossen.

Im Innern der Aufnahme 4 sind Antriebsmittel 6, 6' aufgenommen, die durch externe Energiezufuhr zu einer hin und her gehenden, durch Doppelpfeil verdeutlichten Linearbewegung 7 in Richtung der Längsachse 8 der Aufnahme 4 bzw. des Aufnahmeraumes 5 antreibbar sind. Die Linearbewegung 7 läßt sich außerhalb des Gehäuses 2 an einem vorzugsweise stangenförmigen Kraftübertragungsglied 12 abgreifen, das mit den Antriebsmitteln 6, 6' in axial fester Verbindung steht und das an demjenigen axialen Endbereich 14 der Aufnahme 4 herausragt, der der nachfolgend als Vorderseite 13 bezeichneten Stirnseite des Gehäuse-Hauptkörpers 3 zugeordnet ist.

Am äußeren Ende des Kraftübertragungsgliedes 12 könnte unmittelbar ein zu bewegendes Bauteil festgelegt werden. Zur Erhöhung der Präzision der Bewegungen und zur Reduzierung des Verschleißes der Antriebsmittel 6, 6' und des Kraftübertragungsgliedes 12 ist es allerdings von Vorteil, wenn der außerhalb der Aufnahme 4 liegende Abschnitt des Kraftübertragungsgliedes 12 vergleichbar den Ausführungsbeispielen an einem Führungsschlitten 15 festgelegt ist (Befestigungsstelle 16), der seinerseits unter Zwischenschaltung einer geeigneten Linearführungseinrichtung 17 außen am Gehäuse-Hauptkörper 3 parallel zur Längsachse 8 verschiebbar geführt ist.

Zweckmäßigerweise überlappt der Führungsschlitten 15 den Gehäuse-Hauptkörper 3 in axialer Richtung, wobei der Überlappungsgrad von der momentanen Hubposition der zugeordneten Antriebsmittel 6, 6' abhängt. Der Führungsschlitten 15 eignet sich zur Befestigung beliebiger zu verlagernder Bauteile, wobei die Linearführungseinrichtung 17 die auftretenden Querkräfte aufnimmt, so daß die Antriebsseite diesbezüglich entlastet ist.

Bei den Ausführungsbeispielen ist die Anordnung so getroffen, daß der die Antriebsmittel 6, 6' enthaltende Antriebsteil und der die Längsführungseinrichtung 17 enthaltende Führungsteil des jeweiligen Linearantriebes 1, 1' nebeneinanderliegend angeordnet sind, so daß sich eine besonders flache Bauweise einstellt. Andere Anordnungen wären aber ebenfalls möglich, beispielsweise ein oberhalb des Antriebsteils laufender Führungsschlitten.

Der elektrische Linearantrieb 1 der Figuren 1 bis 3 zeichnet sich besonders dadurch aus, daß seine Antriebsmittel 6 Bestandteil eines elektrischen Linearmotors 18 sind, der als patronenartige Einheit - nachfolgend als Linearmotoreinheit 22 bezeichnet - in die Aufnahme 4 eingesetzt und gehäusefest fixiert ist. Sämtliche Antriebsteile sind also kompakt zusammengefaßt und sind beim gezeigten Ausführungsbeispiel von einer der beiden stirnseitigen Öffnungen 23, 24 her koaxial in den Aufnahmeraum 5 eingesteckt.

Auf diese Weise gestaltet sich die Montage des elektrischen Linearantriebes 1 sehr einfach und wartungsbedingte Stillstandszeiten sind stark reduziert, weil im Defektfalle ein rascher Austausch der Linearmotoreinheit 22 erfolgen kann. Bei dem gezeigten Ausführungsbeispiel ist die Linearmotoreinheit 22 über die an der Rückseite 25 des Gehäuse-Hauptkörpers 3 liegende Öffnung 23 in den Aufnahmeraum 5 eingesetzt. Dabei ist die Baulänge des Linearmotors 18 so auf die Baulänge des Gehäuse-Hauptkörpers 3 abgestimmt, daß er zum größten Teil vollständig im Innern des Aufnahmeraumes 5 aufgenommen ist.

Beim Ausführungsbeispiel ist die Anordnung so getroffen, daß das Motorgehäuse 26 des Linearmotors vollständig in den Aufnahmeraum 5 eintaucht und lediglich ein sich rückseitig an das Motorgehäuse 26 anschließender Schnittstellenkörper 27 über den Gehäuse-Hauptkörper 3 hinausragt. Der Schnittstellenkörper 27 verfügt über nur schematisch angedeutete elektrische Anschlußmittel 28, die der Zufuhr und/oder Abfuhr von für den Betrieb des Linearmotors 18 verwendeten Signalen dienen. Regelmäßig werden über die elektrischen Anschlußmittel elektrische Betätigungssignale zugeführt, die die lineare Hubbewegung der Antriebsmittel 6 bewirken. Ferner können Detektionssignale abgeführt werden, die von einer in den Linearmotor 18 integrierten Positionserfassungseinrichtung stammen, mit deren Hilfe eine exakte axiale Positionierung der Antriebsmittel 6 und des mit diesen verbundenen Kraftübertragungsgliedes 12 möglich ist.

Die elektrischen Anschlußmittel 28 können wie abgebildet Bestandteil einer Multipol-Kupplungseinrichtung sein, die insbesondere als Steckeinrichtung ausgeführt ist.

Die gehäusefeste Fixierung des Linearmotors 18 kann durch an sich beliebige Befestigungsmittel erfolgen. Beim Ausführungsbeispiel wird sie dadurch erreicht, daß der Linearmotor 18 mit seinem Motorgehäuse 26 in den Aufnahmeraum 5 eingeschraubt ist. Hierzu verfügt das Motorgehäuse 26 am Außenumfang über ein zweckmäßigerweise auf den hinteren Endbereich des Motorgehäuses 26 beschränktes Außengewinde 32, das in ein komplementäres Innengewinde 33 eingreift, welches im rückseitigen axialen Endbereich 34 des Aufnahmeraumes 5 vorgesehen ist. Somit erfolgt die Montage durch einen kombinierten Steck- und Schraubvorgang, wobei der Linearmotor 18 mit seinem gewindelosen vorderen Bereich voraus über die rückseitige Öffnung 23 in die Aufnahme 4 eingesteckt wird, bis das Außengewinde 32 mit dem Innengewinde 33 in Kontakt gelangt, wonach das Motorgehäuse 26 noch um die Längsachse 8 verdreht wird, bis die beiden Gewinde miteinander verschraubt und sowohl die axiale als auch die rotative Position des Motorgehäuses 26 mit Bezug zum Gehäuse-Hauptkörper 3 festgelegt ist. Die Axialposition kann dabei durch die vorgegebene Gewindelänge oder durch separate nicht näher gezeigte Anschlagmittel vorgegeben werden.

Insbesondere bei einer Ausführungsform, bei der der Linearmotor 18 zumindest auch im Rahmen einer Drehbewegung in der Aufnahme 4 plaziert wird, ist es von Vorteil, wenn zumindest der innerhalb der Aufnahme 4 liegende Längenabschnitt des Motorgehäuses 26 eine kreisförmige Außenkontur hat. Mit diesem kreiszylindrischen Längenabschnitt kann sich das Motorgehäuse 26 auch sehr gut an der Innenfläche des Aufnahmeraumes 5 abstützen, wenn dieser an seiner Innenkontur wie vorliegend komplementär zur Außenkontur des betreffenden Längenabschnittes des Motorgehäuses 26 ausgebildet ist.
Allerdings sind auch Bauformen möglich, bei denen die innere Querschnittskontur des Aufnahmeraumes 5 und die äußere Querschnittskontur des in diesem angeordneten Längenabschnittes des Motorgehäuses 26 unkreisförmig ausgeführt sind, wobei beispielsweise ovale oder mehreckförmige und hierbei insbesondere rechteckförmige oder quadratische Gestaltungen möglich sind. Derartige Bauformen haben auch den Vorteil, daß die Drehwinkellage des Motorgehäuses 26 beim Einbau automatisch vorgegeben wird und gleichzeitig eine Verdrehsicherung erzielt wird.

Durch die exakte Anpassung der Querschnittskonturen ist gewährleistet, daß der Linearmotor 18 in Querrichtung gut abgestützt ist und auch dann sicher gehalten wird, wenn sich die zur axialen Fixierung dienenden Befestigungsmaßnahmen (Gewinde 32, 33) nur auf den hinteren Endbereich des Motorgehäuses 26 beschränken.

Der Linearmotor 18 selbst kann von an sich bekannter Bauart sein wie er beispielsweise in dem Übersichtsprospekt "Linearantriebe LinMot-P" der Firma Sulzer Electronics AG beschrieben ist. Bevorzugt arbeitet der Linearmotor nach dem elektrodynamischen Prinzip, wobei die Rückwirkungskräfte auf eine Permanentmagnetanordnung 35 herangezogen werden. Die Antriebsmittel 6 sind von einem beispielsweise kolbenähnlichen Läufer 36 gebildet, der die erwähnte Permanentmagnetanordung 35 trägt, welche zweckmäßigerweise aus einer Mehrzahl koaxial aufeinanderfolgend angeordneter und zweckmäßigerweise segmentiert ausgebildeter ringförmiger Permanentmagnete 37 besteht, die radial polarisiert sind, wobei die Polarisierung unmittelbar aufeinanderfolgender Permanentmagnete 37 einander entgegengesetzt ist. Die Permanentmagnetanordnung 35 sitzt auf einem Träger, der beim Ausführungsbeispiel von einem Längenabschnitt des Kraftübertragungsgliedes 12 gebildet ist.

Der Läufer 36 befindet sich im Innern eines rohrförmigen Längenabschnittes 38 des Motorgehäuses 26, der zweckmäßigerweise aus Stahlmaterial besteht und einen magnetischen Rückschluß bildet. An der Innenfläche des rohrförmigen Längenabschnittes 38 befindet sich eine hohlzylindrische Spulenanordnung 42, die den Läufer 36 koaxial mit radialem Spiel umgibt und aus einer Vielzahl axial aufeinanderfolgend angeordneter Teilspulen 43 besteht, deren axiale Breite zweckmäßigerweise jeweils der halben Breite der einzelnen Permanentmagnete 37 entspricht. Die Teilspulen sind beim Ausführungsbeispiel hälftig in Reihe geschaltet, wobei jeweils wiederum die Hälfte der Spulen umgekehrt polarisiert ist, um eine einheitliche Kraftrichtungswirkung zu erreichen. Die Ansteuerung erfolgt durch elektrische Spannungssignale, die über die elektrischen Anschlußmittel 28 zugeführt werden und zur Folge haben, daß ein wanderndes Feld erzeugt wird, das den linearen Antrieb des Läufers 36 in der einen oder anderen axialen Richtung relativ zur Spulenanordnung 42 und zum Motorgehäuse 26 bewirkt.

Die Spulenanordnung 42 kann ergänzend so ausgelegt sein, daß sich über sie eine Positionserfassung des Läufers 36 vornehmen läßt, so daß man von einer in den Antriebsmotor integrierten Positionserfassungseinrichtung sprechen kann.

Ersichtlich ermöglicht der elektrische Linearantrieb eine Bauweise, die mit derjenigen fluidischer und beispielsweise pneumatischer Linearantriebe praktisch identisch ist, so daß auf Basis übereinstimmender Ausgangsbauteile auf rationelle und flexible Weise Linearantriebe von wahlweise elektrischer und fluidischer Betriebsweise hergestellt werden können. Besonders deutlich macht dies die Figur 4, die einen fluidischen Linearantrieb 1' zeigt, dessen Ausgestaltung mit Ausnahme der abweichenden Antriebsmaßnahmen mit derjenigen des elektrischen Linearantriebes 1 der Figuren 1 bis 3 übereinstimmt.

Bei dem fluidischen Linearantrieb 1' der Figur 4 sind die bezüglich des elektrischen Linearantriebes 1 einander entsprechenden Bauteile mit identischen Bezugszeichen versehen. Wie ohne weiteres ersichtlich, ist die Kombination aus Führungsschlitten 15 und Gehäuse-Hauptkörper 3 bei beiden Arten von Linearantrieben 1, 1' identisch. Anstelle elektrisch betätigter Antriebsmittel 6 kommen nun aber fluidisch betätigte Antriebsmittel 6' zum Einsatz, die beim Ausführungsbeispiel von einem Kolben 44 gebildet sind, der axial verschiebbar in die Aufnahme 4 eingesetzt ist und gleitend an der Innen-Umfangsfläche des Aufnahmeraumes 5 anliegt. Die Linearmotoreinheit 22 ist hierbei komplett entfernt und das Kraftübertragungsglied 12 besteht aus einer Kolbenstange, die einenends am Kolben 44 festgelegt ist und andernends am Führungsschlitten 15 angreift.

Verglichen mit dem elektrischen Linearantrieb 1 ist die äußere Formgebung des fluidischen Linearantriebes 1' zumindest im wesentlichen und vorzugsweise vollständig identisch und als weitere Übereinstimmung verfügen die beiderseitigen Aufnahmeräume 5 über die gleiche Querschnittsform. Somit besteht die Möglichkeit, auf Basis ein und derselben Baugröße von Gehäuse 2 wahlweise einen elektrischen Linearmotor 18 oder einen Kolben 44 in den Aufnahmeraum 5 einzusetzen und dementsprechend die Betriebsart des Linearantriebes nach Bedarf auszuwählen.

Im Innern des Gehäuse-Hauptkörpers 3 sind dabei Fluidkanäle 45, 46 ausgebildet, die nur bei einer Verwendung als fluidischer Linearantrieb 1' Verwendung finden und bei einem Einsatz als elektrischer Linearantrieb 1 ungenutzt bleiben. Sie dienen bei einer Verwendung als fluidischer Linearantrieb 1' gemäß Figur 4 zur Zufuhr und/oder Abfuhr des die Antriebskraft für den Kolben 44 liefernden fluidischen und vorzugsweise pneumatischen Druckmediums.

Jeder der beiden Fluidkanäle 45, 46 erstreckt sich im Innern des Gehäuse-Hauptkörpers 3 zwischen einer Gehäuse-Außenfläche - vorliegend an der Rückseite 25 - und einem von zwei Arbeitsräumen 47, 48, die der Kolben 44 im Aufnahmeraum 5 voneinander abteilt. An seinen beiden axialen Endbereichen 14, 34 ist der Aufnahmeraum 5 durch jeweils eine gehäusefest fixierte Abschlußwand 49, 50 verschlossen, wobei jede dieser Abschlußwände 49, 50 eine dem Kolben 44 entgegengesetzte Begrenzungswand für einen der Arbeitsräume 47, 48 bildet. Somit kann über die externen Kanalmündungen, an die sich weiterführende Fluidleitungen anschließen lassen, die Fludibeaufschlagung der Arbeitsräume 47, 48 und somit die axiale Hubbewegung des Kolbens 44 und des Kraftübertragungsgliedes 12 gesteuert werden.

Die rückseitige Abschlußwand 50 ist deckelartig ausgeführt und insbesondere axial in den Aufnahmeraum 5 eingesetzt, so daß sie zweckmäßigerweise nicht über die Rückseite 25 hinausragt. Die Befestigung erfolgt durch eine Schraubverbindung, wobei das schon erwähnte Innengewinde 33 verwendet wird, in das die rückwärtige Abschlußwand 50 mit einem komplementären Außengewinde 54 eingeschraubt ist.

Über eine vergleichbare Schraubbefestigung ist auch die vordere Abschlußwand 49 am Gehäuse-Hauptkörper 3 festgelegt, indem sie mit einem Außengewinde 52 in den mit einem Innengewinde 53 versehenen vorderen Endabschnitt 14 des Aufnahmeraumes 5 eingeschraubt ist. Dieses Innengewinde 53 kann bei einem Linearantrieb elektrischer Bauart gemäß Figuren 1 bis 3 funktionslos sein.

Die vordere Abschlußwand 49 des Gehäuses 2 ist ring- bzw. hülsenähnlich ausgeführt, wobei sie das stangenartige Kraftübertragungsglied 12 unter Abdichtung umschließt. Auch die vordere Abschlußwand 49 kommt zweckmäßigerweise über ihre gesamte Länge axial innerhalb des Aufnahmeraumes 5 zu liegen.

Ersichtlich besteht somit die Möglichkeit, eine Mehrzahl von unabhängig voneinander verwendbaren Linearantrieben bereitzustellen, unter denen sich wenigstens ein elektrischer Linearantrieb 1 und wenigstens ein fluidischer Linearantrieb 1' befinden, wobei diese beiden Linearantriebe in ihrer äußeren Formgebung im wesentlichen übereinstimmen, so daß bei der Fertigung zumindest überwiegend auf Gleichteile und dementsprechend auf identische Herstellungswerkzeuge zurückgegriffen werden kann und bezüglich der am Einsatzort zu treffenden Installationsmaßnahmen Kompatibilität gegeben ist. Der übereinstimmende Querschnitt der beiderseitigen Aufnahmen bietet dabei die Möglichkeit, nach Wahl elektrisch betätigte Antriebsmittel 6 oder fluidisch betätigte Antriebsmittel 6' einzubauen, was bei der Herstellung der Linearantriebe eine hohe Flexibilität bietet. Gehören dazuhin die elektrischen Antriebsmittel zu einem nach Art einer Patrone oder Kartusche kompakt zusammengefaßten elektrischen Linearmotor, wird der Zusammenbau besonders vereinfacht, weil eine zeitsparende Einschubmontage möglich ist.

## Patentansprüche

1. Linearantrieb, mit einem Gehäuse (2), das eine Aufnahme (4) begrenzt, in der Antriebsmittel (6) angeordnet sind und aus der an mindestens einem axialen Endbereich (14) ein mit den Antriebsmitteln (6) zusammenwirkendes Kraftübertragungsglied (12) herausragt, **dadurch gekennzeichnet, daß** die Antriebsmittel (6) Bestandteil eines elektrischen Linearmotors (18) sind, der als patronenartige Einheit (22) in die Aufnahme (4) eingesetzt und gehäusefest fixiert ist.

2. Linearantrieb nach Anspruch 1, **gekennzeichnet durch** ein über wenigstens einen Teil seiner Länge rohrartig ausgebildetes Motorgehäuse (26) des Linearmotors (18), das in die Aufnahme (4) eintaucht und dessen Außenkontur komplementär zur Innenkontur der Aufnahme (4) ausgebildet ist.

3. Linearantrieb nach Anspruch 2, **dadurch gekennzeichnet, daß** die Querschnittskontur der Aufnahme (4) und des in diesem angeordneten Längenabschnittes des Motorgehäuses (26) kreisförmig gestaltet ist.

4. Linearantrieb nach Anspruch 2, **dadurch gekennzeichnet, daß** die Querschnittskontur der Aufnahme (4) und des in dieser angeordneten Längenabschnittes des Motorgehäuses (26) unkreisförmig und dabei vorzugsweise oval oder rechteckförmig gestaltet ist.

5. Linearantrieb nach einem der Ansprüche 1 bis 4, **dadurch gekennzeichnet, daß** der Linearmotor (18) in die Aufnahme (4) eingesteckt und/oder eingeschraubt ist.

6. Linearantrieb nach einem der Ansprüche 1 bis 5, **dadurch gekennzeichnet, daß** die Aufnahme (4) über ihre gesamte Länge hinweg umfangsseitig geschlossen ist.

7. Linearantrieb nach einem der Ansprüche 1 bis 6, **dadurch gekennzeichnet, daß** die Aufnahme (4) von einem sich in einem Gehäuse-Hauptkörper (3) des Gehäuses (2) erstreckenden länglichen Aufnahmeraum (5) gebildet ist, in den die patronenartige Linearmotoreinheit (22) koaxial eingesetzt ist.

8. Linearantrieb nach Anspruch 7, **dadurch gekennzeichnet, daß** der Linearmotor (18) ein über zumindest einen Großteil seiner Länge im Innern des Aufnahmeraumes (5) angeordnetes Motorgehäuse (26) aufweist, aus dem einenends das Kraftübertragungsglied (12) herausragt und das andernends über elektrische Anschlußmittel (28) für die Zufuhr und/oder Abfuhr elektrischer Signale verfügt.

9. Linearantrieb nach Anspruch 8, **dadurch gekennzeichnet, daß** die elektrischen Anschlußmittel (28) Bestandteil einer insbesondere als Steckeinrichtung ausgebildeten Kupplungseinrichtung sind.

10. Linearantrieb nach einem der Ansprüche 7 bis 9, **dadurch gekennzeichnet, daß** der Aufnahmeraum (5) den Gehäuse-Hauptkörper (3) in Längsrichtung vollständig durchsetzt.

11. Linearantrieb nach einem der Ansprüche 7 bis 10, **dadurch gekennzeichnet, daß** der Gehäuse-Hauptkörper (3) ein insbesondere aus Aluminiummaterial bestehender strangpreßkörper ist.

12. Linearantrieb nach einem der Ansprüche 7 bis 11, **dadurch gekennzeichnet, daß** der elektrische Linearmotor (18) nicht oder zumindest nur geringfügig aus dem Aufnahmeraum (5) hinausragt.

13. Linearantrieb nach einem der Ansprüche 1 bis 12, **dadurch gekennzeichnet, daß** die Antriebsmittel (6) des elektrischen Linearmotors eine ortsfest am Motorgehäuse (26) angeordnete Spulenanordnung (42) und einen mit dem Kraftübertragungsglied (12) zusammenwirkenden, eine Permanentmagnetanordnung (35) aufweisenden, linear bewegbaren Läufer (36) enthalten.

14. Linearantrieb nach einem der Ansprüche 1 bis 13, **dadurch gekennzeichnet, daß** das Kraftübertragungsglied (12) an einem Führungsschlitten (15) angreift, der außen am Gehäuse (2) linear verschiebbar geführt ist.

15. Linearantrieb nach einem der Ansprüche 1 bis 14, **dadurch gekennzeichnet, daß** er Bestandteil einer Mehrzahl unabhängig voneinander verwendbarer Linearantriebe (1, 1') ist, unter denen sich zusätzlich zu dem elektrischen Linearantrieb (1) auch mindestens ein fluidischer Linearantrieb (1') befindet, dessen Gehäuse-Hauptkörper (3) einen Aufnahmeraum (5) für fluidisch betätigte Antriebsmittel (6') aufweist, wobei die Gehäuse-Hauptkörper (3) des elektrischen und des fluidischen Linearantriebes (1, 1') in ihrer äußeren Formgebung zumindest im wesentlichen übereinstimmen und die Aufnahmeräume (5) beider Linearantriebe (1, 1') die gleiche Querschnittsform haben.

16. Linearantrieb nach Anspruch 15 in Verbindung mit Anspruch 14, **dadurch gekennzeichnet, daß** die Kombination aus Führungsschlitten (15) und Gehäuse-Hauptkörper (3) bei dem elektrischen und dem fluidischen Linearantrieb (1, 1') identisch ausgebildet ist.

17. Linearantrieb nach Anspruch 15 oder 16, **dadurch gekennzeichnet, daß** die Antriebsmittel (6') des fluidischen Linearantriebes (1') einen am Innenumfang des Aufnahmeraumes (5) axial verschiebbar geführten Kolben (44) enthalten.

18. Linearantrieb nach einem der Ansprüche 15 bis 17, **dadurch gekennzeichnet, daß** der Aufnahmeraum (5) des fluidischen Linearantriebes (1') an beiden axialen Endbereichen (14, 34) durch am Gehäuse-Hauptkörper (3) fixierte Abschlußwände (49, 50) verschlossen ist, die zweckmäßigerweise axial in den Aufnahmeraum (5) eintauchen.

## Claims

1. Linear drive with a housing (2) bounding a receptacle (4) on which drive means (6) are located and from which extends from at least one axial end section (14) a power transmission element (12) working in conjunction with the drive means (6), **characterised in that** the drive means (6) form part of an electrical linear motor (18) which is inserted into the receptacle (4) as a cartridge-like unit (22) and is securely fixed to the housing.

2. Linear drive according to claim 1, **characterised by** a motor housing (26) of the linear motor (18) which is tubular in form over at least part of its length, which dips into the receptacle (4) and has an external contour complementary to the inside contour of the receptacle (4).

3. Linear drive according to claim 2, **characterised in that** the cross-sectional contour of the receptacle (4) and of the section of length of the motor housing (26) located therein is circular in shape.

4. Linear drive according to claim 2, **characterised in that** the cross-sectional contour of the receptacle (4) and of the section of length of the motor housing (26) located therein is non-circular and at the same time preferably oval or rectangular in shape.

5. Linear drive according to any of claims 1 to 4, **characterised in that** the linear motor (18) is inserted and/or screwed into the receptacle (4).

6. Linear drive according to any of claims 1 to 5, **characterised in that** the receptacle (4) is closed on the peripheral side over its entire length.

7. Linear drive according to any of claims 1 to 6, **characterised in that** the receptacle (4) is formed by an elongated mounting space (5) extending in a housing main body (3) of the housing (2), in which the cartridge-like linear motor unit (22) is coaxially inserted.

8. Linear drive according to claim 7, **characterised in that** the linear motor (18) has a motor housing (26) mounted inside the mounting space (5) over at least a major part of its length, from which the power transmission element (12) extends at one end, while the other end has electrical connection means (28) for the supply and/or conducting away of electrical signals.

9. Linear drive according to claim 8, **characterised in that** the electrical connection means (28) are part of a coupling device, in particular in the form of a plug-and-socket unit.

10. Linear drive according to any of claims 7 to 9, **characterised in that** the mounting space (5) passes completely through the housing main body (3) in the longitudinal direction.

11. Linear drive according to any of claims 7 to 10, **characterised in that** the housing main body (3) is an extruded body made in particular of aluminium material.

12. Linear drive according to any of claims 7 to 11, **characterised in that** the electrical linear motor (18) does not extend out from the mounting space (5), or at least only slightly.

13. Linear drive according to any of claims 1 to 12, **characterised in that** the drive means (6) of the electrical linear motor contain a coil assembly (42) fixed rigidly to the motor housing (26), and a rotor (36) able to move linearly and having a permanent magnet assembly (35) which works in conjunction with the power transmission element (12).

14. Linear drive according to any of claims 1 to 13, **characterised in that** the power transmission element (12) acts on a guide carriage (15) guided on the outside of the housing (2) and capable of sliding linearly.

15. Linear drive according to any of claims 1 to 14, **characterised in that** it is part of a multiplicity of linear drives (1, 1') capable of being used independently of one another and among which, in addition to the electrical linear drive (1) there is also at least one fluidic linear drive (1'), the housing main body (3) of which has a mounting space (5) for fluidically actuated drive means (6'), while the housing main bodies (3) of the electrical and fluidic linear drives (1, 1') have external shapes which substantially coincide and have the same cross-sectional shape as the mounting spaces (5) of both linear drives (1, 1').

16. Linear drive according to claim 15 in combination with claim 14, **characterised in that** the combination of guide carriage (15) and housing main body (3) is identical in both the electrical and the fluidic linear drive (1, 1').

17. Linear drive according to Claim 15 or 16, **characterised in that** the drive means (6') of the fluidic linear drive (1') contain a piston (44) guided with axial sliding facility on the inner circumference of the mounting space (5).

18. Linear drive according to any of claims 15 to 17, **characterised in that** the mounting space (5) of the fluidic linear drive (1') is closed at both axial end sections (14, 34) by end walls (49, 50) fixed to the housing main body (3), which expediently dip axially into the mounting space (5).

## Revendications

1. Entraînement linéaire, comprenant un carter (2), qui délimite un logement (4), dans lequel sont disposés des moyens d'entraînement (6), et depuis lequel fait saillie un élément de transmission de force (12) coopérant avec les moyens d'entraînement (6) sur l'une des zones d'extrémité (14) axiales, **caractérisé en ce que** les moyens d'entraînement (6) font partie d'un moteur linéaire (18) électrique, qui est installé et fixé fermement sur le carter dans le logement (4) en tant qu'unité (22) en forme de cartouche.

2. Entraînement linéaire selon la revendication 1, **caractérisé par** un carter de moteur (26) du moteur linéaire (18), réalisé de manière tubulaire sur au moins une partie de sa longueur, lequel carter s'enfonce dans le logement (4) et dont le contour extérieur est réalisé de manière complémentaire au contour intérieur du logement (4) .

3. Entraînement linéaire selon la revendication 2, **caractérisé en ce que** le contour en section transversale du logement (4) et de la section longitudinale du carter de moteur (26) disposé dans celui-ci est circulaire.

4. Entraînement linéaire selon la revendication 2, **caractérisé en ce que** le contour en section transversale du logement (4) et de la section longitudinale du carter de moteur (26) disposé dans celui-ci n'est pas circulaire et est ainsi de préférence ovale ou rectangulaire.

5. Entraînement linéaire selon l'une des revendications 1 à 4, **caractérisé en ce que** le moteur linéaire (18) est encastré et/ou vissé dans le logement (4).

6. Entraînement linéaire selon l'une des revendications 1 à 5, **caractérisé en ce que** le logement (4) est fermé sur l'ensemble de sa longueur du côté de sa périphérie.

7. Entraînement linéaire selon l'une des revendications 1 à 6, **caractérisé en ce que** le logement (4) est formé par un espace de logement (5) longitudinal s'étendant dans un corps principal du carter (3) du carter (2), espace dans lequel est insérée dans le sens axial l'unité du moteur linéaire (22) en forme de cartouche.

8. Entraînement linéaire selon la revendication 7, **caractérisé en ce que** le moteur linéaire (18) présente un carter de moteur (26) disposé sur au moins une grande partie de sa longueur à l'intérieur de l'espace de logement (5), carter d'où fait saillie d'un côté l'élément de transmission de force (12) et qui d'un autre côté dispose de moyens de raccordement (28) électriques pour l'arrivée et/ou la sortie de signaux électriques.

9. Entraînement linéaire selon la revendication 8, **caractérisé en ce que** les moyens de raccordement (28) électriques font partie d'un dispositif de couplage réalisé en particulier comme dispositif d'enfichage.

10. Entraînement linéaire selon l'une des revendications 7 à 9, **caractérisé en ce que** l'espace de logement (5) traverse complètement le corps principal de carter (3) en direction longitudinale.

11. Entraînement linéaire selon l'une des revendications 7 à 10, **caractérisé en ce que** le corps principal de carter (3) constitue en particulier un corps extrudé en aluminium.

12. Entraînement linéaire selon l'une des revendications 7 à 11, **caractérisé en ce que** le moteur linéaire (18) électrique ne fait pas saillie, ou au moins légèrement de l'espace de logement (5).

13. Entraînement linéaire selon l'une des revendications 1 à 12, **caractérisé en ce que** les moyens d'entraînement (6) du moteur linéaire électrique présentent un dispositif de bobine (42) disposé de manière stationnaire sur le carter de moteur (26) et un rotor (36) mobile de manière linéaire, coopérant avec l'élément de transmission de force (12) et présentant un agencement d'aimant permanent (35).

14. Entraînement linéaire selon l'une des revendications 1 à 13, **caractérisé en ce que** l'élément de transmission de force (12) est appliqué sur un curseur de guidage (15), qui est guidé, en pouvant se déplacer de manière linéaire, à l'extérieur sur le carter (2).

15. Entraînement linéaire selon l'une des revendications 1 à 14, **caractérisé en ce qu'**il fait partie d'une pluralité d'entraînements linéaires (1, 1') pouvant être utilisés indépendamment les uns des autres, parmi lesquels se trouve, en plus de l'entraînement linéaire (1) électrique, également au moins un entraînement linéaire (1') hydraulique, dont le corps principal de carter (3) présente un espace de logement (5) pour des moyens d'entraînement (6') actionnés de manière hydraulique, les corps principaux de carter (3) des entraînements linéaires (1, 1') électrique et hydraulique coïncidant au moins sensiblement dans leur configuration extérieure, et les espaces de logement (5) des deux entraînements linéaires (1, 1') présentant la même forme de section transversale.

16. Entraînement linéaire selon la revendication 15 en liaison avec la revendication 14, **caractérisé en ce que** la combinaison de curseurs de guidage (15) et de corps principaux de carter (3) est identique dans les entraînements linéaires (1, 1') électrique et hydraulique.

17. Entraînement linéaire selon la revendication 15 ou 16, **caractérisé en ce que** les moyens d'entraînement (6') de l'entraînement linéaire (1') hydraulique présentent un piston (44) guidé en pouvant se déplacer dans le sens axial sur la périphérie intérieure de l'espace de logement (5) .

18. Entraînement linéaire selon l'une des revendications 15 à 17, **caractérisé en ce que** l'espace de logement (5) de l'entraînement linéaire (1') hydraulique est fermé sur les deux zones d'extrémité (14, 34) axiales par les parois de fermeture (49, 50) fixées sur le corps principal de carter (3), lesquelles parois s'enfoncent de manière appropriée dans le sens axial dans l'espace de logement (5).
